# EUROPÄISCHE PATENTSCHRIFT

(11) **EP 0 894 988 B1**
(45) Veröffentlichungstag und Bekanntmachung des Hinweises auf die Patenterteilung: **26.11.2003**
(21) Anmeldenummer: 98111950.6
(22) Anmeldetag: 29.06.1998
(51) Int. Cl.: F16B 37/12, B60R 19/22

(54) **Verfahren zum Verbinden eines Schaumstoffkerns mit einer Hülle**
Method for joining a foam core with a shell
Procédé de liaison d'un corps en mousse avec une enveloppe

(30) Priorität: 29.07.1997 DE 19732559
(43) Veröffentlichungstag der Anmeldung: 03.02.1999
(73) Patentinhaber: BASF AKTIENGESELLSCHAFT, 67056 Ludwigshafen (DE)
(72) Erfinder: Haardt, Udo, 68647 Biblis (DE); Tatzel, Hermann, 69469 Weinheim (DE)

(56) Entgegenhaltungen:
- EP-A- 0 205 994
- EP-A- 0 425 923
- EP-A- 0 677 430
- DE-A- 2 628 832
- US-A- 4 427 189
- US-A- 4 800 643
- US-A- 5 067 759
- US-A- 5 080 411

## Beschreibung

Die Erfindung betrifft ein Verfahren zum Verbinden eines Schaumstoffkerns aus Kunststoff-Hartschaum mit einer Hülle, die Bestandteil eines Stoßfängersystems für Automobile sind.

Schaumstoff-Formkörper werden mit Hüllen üblicherweise durch Verkleben, Anklemmen oder Verschrauben verbunden. Diese Methoden sind jedoch mit Nachteilen behaftet: beim Verkleben läßt sich die Verbindung meist nicht mehr rückgängig machen; Anklemmen und Verschrauben führen in vielen Fällen nicht zum einer ausreichenden Verbindung. Dies ist insbesondere dann der Fall, wenn Schaumstoffkern und Hülle Bestandteile eines Stoßfängersystems für Automobile sind, wie es z.B. in EP-A 425 923 beschrieben ist.

Auch in US-A 5,080,411 und EP-A 677 430 sind Stoßfängersysteme beschrieben, die eine Hülle aus einem Propylenpolymerisat und einen Schaumstoffkern aus einem Kunststoff-Hartschaum umfassen. Dabei ist die Hülle aber an der Automobil-Karosserie bzw. am Stoßfängerträger befestigt, nicht jedoch am Schaumstoffkern.

Die EP-A 205 944 betrifft eine Befestigung von Bauelementen, z.B. von Kunststoff-Paneeelen an Wandverkleidungen, insbesondere Isolierverkleidungen aus Hartschaum, vorzugsweise aus Polyurethan. In diesen Hartschaum wird ein Dübel mit Außengewinde eingeschraubt. Der Dübel weist ein Innengewinde auf, in das eine Schraube eingedreht werden kann, mit der das Bauelement befestigt wird. Polyurethan-Hartschäume sind für Automobil-Stoßfängersysteme weniger gut geeignet, das einfache Eindrehen eines Dübels in den Schaumstoffkern ergibt keine ausreichend gute Verbindung.

Der Erfindung lag daher die Aufgabe zugrunde, ein verbessertes Verfahren zum Verbinden des Schaumstoffkerns mit der Hülle eines Stoßfängersystems zu entwickeln.

Es wurde gefunden, daß diese Aufgabe durch eine Schraube/Muffe-Kombination gelöst wird, wobei die Muffe im Schaumstoffkern eingeschäumt und dadurch fest darin verankert ist, und die Schraube durch die Hülle hindurch in die Muffe eingedreht wird.

Der Schaumstoffkern besteht aus einem Kunststoff-Hartschaum. Dieser ist ein Partikelschaum aus einem Propylenpolymerisat, das vorzugsweise 2 bis 10 Gew.-% Ethylen oder Buten-1 einpolymerisiert enthält und ein Raumgewicht von 30 bis 150 g.l⁻¹ aufweist.Die Hülle besteht aus einem Propylenpolymerisat, welches vorzugsweise mit 25 bis 65 Gew.-% eines Ethylen/Propylenkautschuks modifiziert ist.

Der Schaumstoffkern weist vorzugsweise eine Dicke von 30 bis 150 mm auf. Die Hülle kann den Kern ganz oder nur teilweise abdecken. Stoßfängerhüllen sind weich und flexibel und weisen eine Dicke von vorzugsweise 1,5 bis 6 mm auf.

Die Verbindung kommt durch eine Schraube/Muffe-Kombination zustande. Die Muffe ist erfindungsgemäß im Kern aus Partikel-Schaumstoffen eingeschäumt. Dies geschieht während des Verschweißens der vorgeschäumten Schaumstoffperlen. Dabei weist das Schäum-Werkzeug einen nach innen gerichteten Stift auf, auf den die Muffe aufgeschoben ist. Die Muffe besitzt außen ein tiefes Außengewinde oder Krallen, die beim Versintern der Schaumstoffperlen die Verankerung bewirken. Nach dem Entformen des Schaumstoffkerns aus dem Werkzeug bleibt die Muffe fest im Kern haften.

Die Muffe kann aus Kunststoff oder aus Metall bestehen. Ihr Durchmesser kann in weiteren Grenzen zwischen 2 und 20 mm schwanken, ihre Länge zwischen 5 und 60 mm. Sie ist mit einem Innengewinde versehen, in das die Schraube eingedreht werden kann. An dem gegenüberliegenden Ende ist sie geschlossen, man nennt dies auch "Sackmuffe". Zur Verbindung der Hülle mit dem Kern wird die Hülle mit einem Loch versehen, durch welches die Schraube geschoben und in die Muffe eingedreht wird.

Bei einer speziellen Ausführungsform ist die Muffe in einem Flacheisen oder einem Kunststoffprofil integriert oder in diese eingedreht. Flacheisen bzw. Kunststoffprofil sind wieder in den Kern eingeschäumt.

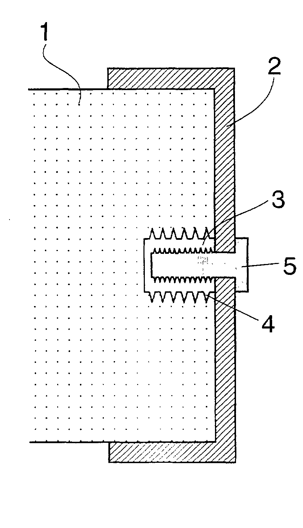

In der Abbildung ist schematisch ein Schnitt durch eine beispielhafte Kern/Hülle-Verbindung dargestellt:

Dabei bedeuten:
1 = Schaumstoffkern
2 = Hülle
3 = Muffe
4 = Außengewinde der Muffe
5 = Schraube

## Patentansprüche

1. Verfahren zum Verbinden eines Schaumstoffkerns (1) aus Kunststoff-Hartschaum mit einer Hülle (2) aus einem Propylenpolymerisat, die Bestandteil eines Stoßfängersystems für Automobile sind, **dadurch gekennzeichnet, dass** der Kunststoff-Hartschaum ein Partikelschaum auf Basis eines Propylenpolymerisats ist, und dass die Verbindung durch eine Schraube/Muffe-Verbindung zustandekommt, wobei die Muffe (3) im Schaumstoffkern (1) während des Verschweißens der vorgeschäumtn Schaumstoffpartikel eingeschäumt und dadurch fest darin verankert wurde, und wobei die Schraube (5) durch die Hülle hindurch in die Muffe (3) eingedreht wird.

2. Verfahren nach Anspruch 1, **dadurch gekennzeichnet, daß** die Muffe (3) ein tiefes Außengewinde (4) oder Krallen aufweist, die beim Versintern der Schaumstoffpartikel die Verankerung bewirken.

3. Verfahren nach Anspruch 1, **dadurch gekennzeichnet, daß** die Muffe (3) in ein Flacheisen oder ein Kunststoffprofil integriert oder eingedreht ist, welche in den Schaumstoffkern (1) eingeschäumt sind.

## Claims

1. A method of connecting a foam core (1) of rigid plastic foam to a shell (2) of a propylene polymer, which are components of a bumper system for automobiles, wherein the rigid plastic foam is a particle foam based on a propylene polymer, and wherein the connection is brought about by a screw/sleeve combination, the sleeve (3) having been incorporated by foaming in the foam core (1) during the fusing of the pre-expanded foam particles and firmly anchored therein as a result, and the screw (5) being screwed through the shell into the sleeve (3).

2. The method as claimed in claim 1, wherein the sleeve (3) has a deep external thread (4) or claws, which effect the anchorage during the sintering of the foam particles.

3. The method as claimed in claim 1, wherein the sleeve (3) is integrated or screwed into a flat metal bar or a plastic profile which is incorporated into the foam core (1) by foaming.

## Revendications

1. Procédé pour lier un coeur de mousse (1) sur une mousse dure en matière plastique avec une enveloppe (2) en polymère de propylène, qui sont le constituant d'un système de pare-chocs pour automobile, **caractérisé en ce que** la mousse dure en matière plastique est une mousse particulaire à base d'un polymère de propylène, et **en ce que** la liaison est réalisée par une liaison vis-écrou, où l'écrou (3) est intégré dans le coeur de mousse (1) pendant le soudage des particules de mousse prémoussées et est ainsi solidement ancré dans celui-ci, et où la vis (5) est vissée par l'enveloppe dans l'écrou (3).

2. Procédé selon la revendication 1, **caractérisé en ce que** l'écrou (3) présente un filet profond externe (4) ou des crampons, qui réalisent l'ancrage pendant l'agglomération des particules de mousse.

3. Procédé selon la revendication 1, **caractérisé en ce que** l'écrou (3) est intégré ou vissé dans un produit laminé plat ou un profil en matière plastique, qui est incorporé lors du moussage dans le coeur de mousse (1).
